**Europäisches Patentamt**

**European Patent Office**

**Office européen des brevets**

(11) Veröffentlichungsnummer : **0 373 143 B1**

(12)

# EUROPÄISCHE PATENTSCHRIFT

(45) Veröffentlichungstag der Patentschrift :
**03.06.92 Patentblatt 92/23**

(51) Int. Cl.⁵ : **B60K 15/067**, B60K 15/03

(21) Anmeldenummer : **89890275.4**

(22) Anmeldetag : **23.10.89**

(54) **Flüssigkeitsbehälter, insbesondere Kraftstoffbehälter für Kraftfahrzeuge.**

(30) Priorität : **11.11.88 AT 2768/88**

(43) Veröffentlichungstag der Anmeldung :
**13.06.90 Patentblatt 90/24**

(45) Bekanntmachung des Hinweises auf die
Patenterteilung :
**03.06.92 Patentblatt 92/23**

(84) Benannte Vertragsstaaten :
**DE FR GB IT**

(56) Entgegenhaltungen :
**DE-A- 2 110 581**

(56) Entgegenhaltungen :
**DE-A- 3 325 449**
**FR-A- 2 596 709**
**US-A- 3 014 730**
**US-A- 3 701 540**
**US-A- 3 968 896**
**US-A- 4 371 181**

(73) Patentinhaber : **STEYR-DAIMLER-PUCH**
**AKTIENGESELLSCHAFT**
**Franz-Josefs-Kai 51**
**A-1010 Wien (AT)**

(72) Erfinder : **Winter, Heinz**
**Packerstrasse 33**
**A-8054 Pirka (AT)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 373 143 B1

## Beschreibung

Die Erfindung betrifft einen Flüssigkeitsbehälter, insbesondere Kraftstoffbehälter, für Kraftfahrzeuge, der mit Hilfe zweier in Parallelebenen angeordneter, den Behälter etwa U-förmig umfassender Spannbänder an der Unterseite des Kraftfahrzeuges befestigt ist.

Bei solchen Flüssigkeits- bzw. Kraftstoffbehältern besteht, wenn sie eine Grundfläche verhältnismäßig großer Abmessungen aufweisen, die Gefahr, daß der Behälterboden im montierten Zustand bei Vollfüllung durchhängt bzw. sich nach unten ausbeult, so daß die Bodenfreiheit des Fahrzeuges beträchtlich verringert wird und im Behälter selbst ungünstige Verhältnisse hinsichtlich der Flüssigkeitsabsaugung u.dgl. auftreten. Diese Schwierigkeiten sind vor allem dann zu befürchten, wenn es sich um einen Kunststoffbehälter handelt, der dann aber gegenüber einer Blechausführung den Vorteil einfacherer Fertigung und geringeren Eigengewichts aufweist, wobei er sich außerdem in seiner Form leicht den örtlichen Raumverhältnissen anpassen läßt und dadurch ein optimales Volumen erhalten kann.

Bei einer bekannten Ausführung (DE-A-2 110 581, US-A-3 697 093) weist der Behälter zur Verstärkung Hohlrippen auf, die an der Außenseite eine Rinne bilden, deren Tiefe vom oberen Behälterrand gegen die Bodenmitte zu abnimmt, wobei die Spannbänder od.dgl. in diesen Rinnen angeordnet sind. Durch derartige Hohlrippen läßt sich aber bei größerem Abstand von Rippe zu Rippe bzw. Rinne zu Rinne das Durchbiegen oder Ausbeulen des Behälterbodens zwischen den Rippen oder Rinnen nicht verhindern, zumal außerdem die Rinnen- bzw. Rippentiefe zum Boden zu praktisch auf Null abnimmt. Es wäre zwar denkbar, zwischen den beiden Spannbändern od.dgl. noch ein drittes Spannband anzuordnen, für das bzw. für dessen Befestigung aber meist nicht genügend Raum zur Verfügung steht.

Es ist ferner ein Kraftstoffbehälter bekannt (US-A-3 968 896), der vorne und hinten auf am Fahrgestellrahmen befestigten Querträgern aufruht und durch zwei den Behälter oben umgreifende Spannbänder gesichert ist, wobei aber ebenfalls eine Unterstützung für den Behälterboden zwischen den Querträgern fehlt. Bei einer anderen bekannten Konstruktion (DE-A-3 325 449) ist der aus thermoplastischem Material bestehende Kraftstoffbehälter mit Rippen versehen, mit deren Hilfe er unmittelbar am Kraftfahrzeug befestigt wird. Außerdem weist der Kraftstoffbehälter ein Korsett aus Metallbändern auf. Dieses Korsett ist aber beinormalen Betriebsbedingungen keinen Spannungen unterworfen, da das Gewicht des Kraftstoffbehälters vollständig von den Rippen gehalten wird, und tritt nur bei Unfällen in Funktion, wenn der Kraftstoffbehälter starker Erwärmung ausgesetzt ist.

Schließlich ist es bekannt (FR-A- 2 596 709), an Stelle von U-förmigen Spannbändern Profilträger vorzusehen, die an ihren Enden mit Hilfe je eines Bandes am Fahrgestellrahmen hängen, wobei die Profilträger in unten offenen Nuten des Behälterbodens liegen. Hier tritt aber die gleiche Schwierigkeit wie bei den U-förmigen Spannbändern auf, da die Profilträger ja nur den mittleren Teil der Spannbänder ersetzen und zwischen ihnen wiederum jegliche Unterstützung des Behälterbodens fehlt, so daß drei derartige Aufhängungen vorgesehen werden müssen, für die eben meistens kein Platz vorhanden ist.

Der Erfindung liegt daher die Aufgabe zugrunde, diese Mängel zu beseitigen und einen Flüssigkeits- bzw. Kraftstoffbehälter der eingangs geschilderten Art zu schaffen, der, da sein Boden ausreichend unterstützt ist, die Bodenfreiheit des Fahrzeuges nicht verschlechtert, einen nur geringen zusätzlichen Montageaufwand erfordert und die Materialkosten kaum erhöht. Die Erfindung löst die gestellte Aufgabe dadurch, daß der Behälterboden wenigstens eine unten offene Nut bildet, daß sich diese Nut quer zu den Spannbändern von dem einen zum anderen erstreckt und daß in der Nut ein mit seinen Enden auf den Spannbändern abgestützter Profilträger passend eingesetzt ist.

Es wird also ein Großteil der zufolge der Flüssigkeitsfüllung auf dem Behälterboden liegenden Last von dem oder den Trägern aufgenommen, die sich ihrerseits an den Spannbändern abstützen, so daß der Behälterboden weitgehend entlastet ist und keine Gefahr des Durchhängens mehr besteht. Dabei wird der Innenraum des Behälters nur geringfügig, nämlich bloß um das Volumen der Nut eingeschränkt, die im Querschnitt verhältnismäßig klein dimensioniert werden kann. Bei Kunststoffausführung des Behälters bringt die Nutausbildung keinerlei Schwierigkeiten mit sich. Da sich die Nut von Spannband zu Spannband erstreckt, die Nutenden also durch die Spannbänder abgedeckt sind, ist bei etwaiger Fahrbahnberührung keine Angriffsfläche an dem in der Nut befindlichen Profilträger gegeben.

Zur Montageerleichterung bzw. zur Schaffung der Möglichkeit, den Profilträger vorzumontieren und dann zusammen mit dem Behälter als Einheit am Kraftfahrzeug zu befestigen, sind die Seitenwände des Profilträgers abgesetzt und an den Nutflanken wenigstens stellenweise Vorsprünge vorgesehen, welche die Absätze schnappverschlußartig hinter- bzw. untergreifen. Die Profilträger brauchen also nur in die Nuten eingedrückt zu werden, so daß sie mit dem Behälter eine für sich leicht befestigbare Einheit bilden.

Erfindungsgemäß sind die Enden der Profilträger abgerundet bzw. abgefast, so daß die Gefahr einer Beschädigung des Behälterbodens durch die Profilträger bei Gewalteinwirkung od.dgl. von vornherein besei-

2

EP 0 373 143 B1

tigt ist.

Schließlich läßt sich eine Materialeinsparung erzielen, wenn der Profilträger ungefähr als Körper gleicher Festigkeit ausgebildet ist, wobei auch eine Vergrößerung des Behälterinnenraumes erreicht werden kann, wenn der Nutlängsschnitt der Trägerform angepaßt wird.

Der Profilträger kann aus Stahlblech bestehen, es ist aber auch möglich, ihn aus faserverstärktem Kunststoff herzustellen.

In der Zeichnung ist der Erfindungsgegenstand in einem Ausführungsbeispiel dargestellt, und zwar zeigen

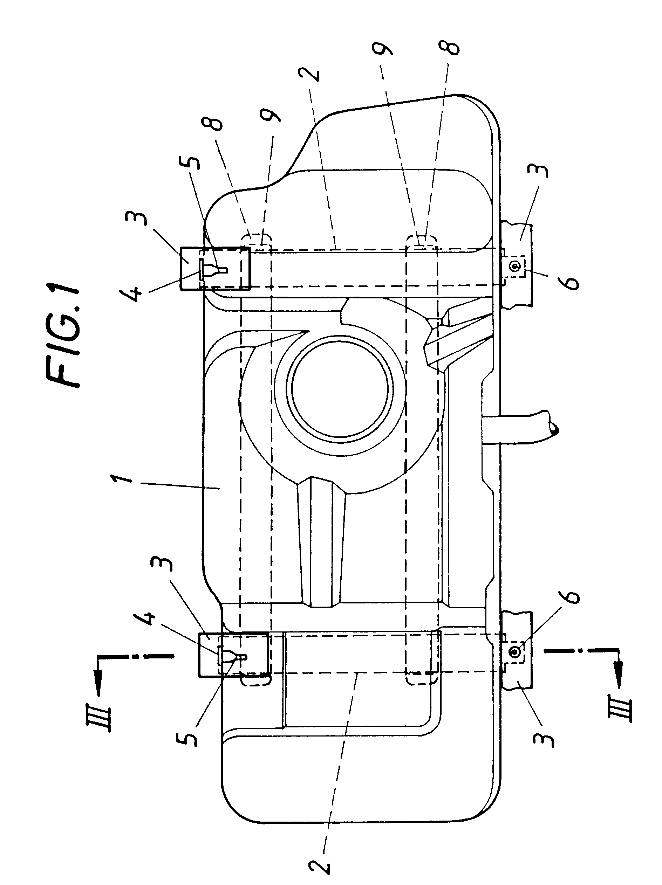

Fig. 1 einen an der Unterseite eines Kraftfahrzeuges befestigten Kraftstoffbehälter in Draufsicht,

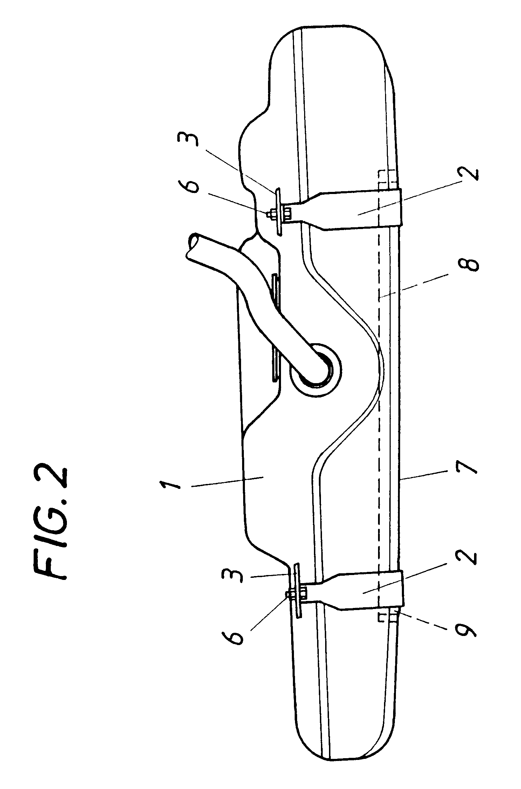

Fig. 2 in Seitenansicht,

Fig. 3 im Querschnitt nach der Linie III-III der Fig. 1 und

Fig. 4 das gemäß Fig. 3 rechte Ende des Spannbandes in Seitenansicht.

Der beispielsweise aus Kunststoff hergestellte Kraftstoffbehälter 1 ist mit Hilfe zweier Spannbänder 2 an der Unterseite eines Kraftfahrzeuges befestigt, von dem nur Blechteile 3 zur Aufnahme der Befestigungsmittel dargestellt sind. Die Spannbänder 2 weisen an ihrem einen Ende eine Art Hammerkopf 4 auf, mit dem sie durch einen Schlitz 5 der einen Befestigungsteile 3 durchgesteckt werden, um nach einer Drehung um 90 durch Querstellung zum Schlitz festzuhalten. Am anderen Ende werden die Spannbänder 2 mit Hilfe von Schrauben 6 befestigt.

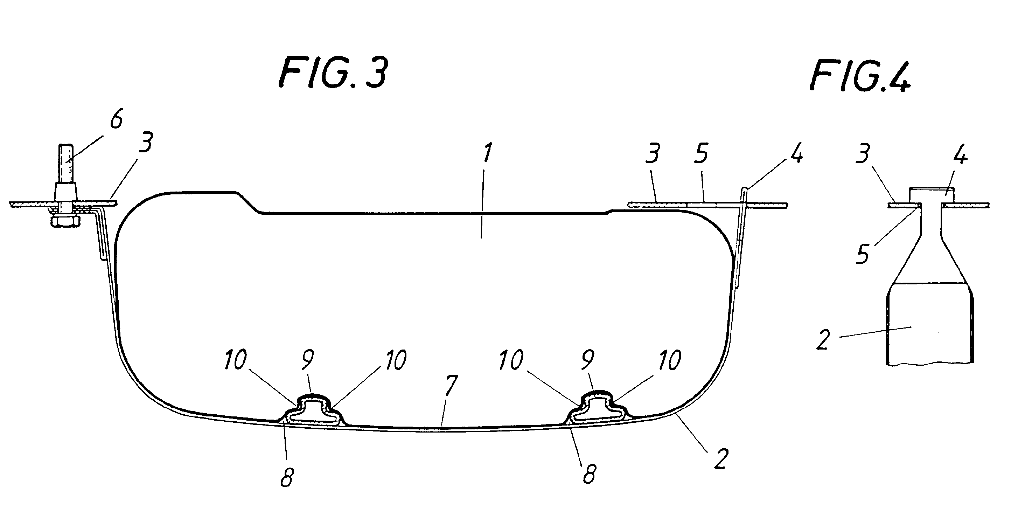

Der Behälterboden 7 weist zwei unten offene Längsnuten 8 auf, die sich von Spannband 2 zu Spannband 2 erstrecken. In den Längsnuten 8 sind Profilträger 9 passend eingesetzt, die sich an den Spannbändern 2 abstützen und ungefähr als Körper gleicher Festigkeit ausgebildet werden können. Die Enden der Profilträger 9 sind abgerundet bzw. abgefast. Es ist ersichtlich, daß die Seitenwände der Profilträger 9 abgesetzt sind (Fig. 3) und an den Flanken der Nuten 8 wenigstens stellenweise Vorsprünge 10 angeordnet sind, welche die Absätze 9 schnappverschlußartig hinter bzw. untergreifen. Die Profilträger 9 können also unter geringfügiger elastischer Deformation der Nutflanken in die Nuten 8 eingedrückt werden, so daß sie dann mit dem Behälter 1 eine manipulierbare Baueinheit bilden.

## Patentansprüche

1. Flüssigkeitsbehälter (1), insbesondere Kraftstoffbehälter für Kraftfahrzeuge, der mit Hilfe zweier in Parallelebenen angeordneter, den Behälter etwa U-förmig umfassender Spannbänder (2) an der Unterseite des Kraftfahrzeuges (3) befestigt ist, dadurch gekennzeichnet, daß der Behälterboden (7) wenigstens eine unten offene Nut (8) bildet, daß sich diese Nut (8) quer zu den Spannbändern (2) von dem einen zum anderen erstreckt und daß in der Nut (8) ein mit seinen Enden auf den Spannbändern (2) abgestützter Profilträger (9) passend eingesetzt ist.

2. Flüssigkeitsbehälter (1) nach Anspruch 1, dadurch gekennzeichnet, daß die Seitenwände des Profilträgers (9) abgesetzt und an den Nutflanken wenigstens stellenweise Vorsprünge (10) vorgesehen sind, welche die Absätze schnappverschlußartig hinter bzw. untergreifen.

3. Flüssigkeitsbehälter (1) nach Anspruch 1 oder 2, dadurch gekennzeichnet, daß die Enden des Profilträgers (9) abgerundet bzw. abgefast sind.

4. Flüssigkeitsbehälter (1) nach einem der Ansprüche 1 bis 3, dadurch gekennzeichnet, daß der Profilträger (9) ungefähr als Körper gleicher Festigkeit ausgebildet ist.

## Claims

1. A container (1) for liquid, particularly a fuel tank, for motor vehicles, which container is secured to the underside of a motor vehicle (3) by means of two straps (2), which extend in parallel planes and embrace the container approximately in U-shape, characterized in that the bottom (7) of the container defines at least one open-bottomed groove (8), which extends from one of the straps (2) to the other transversely thereto, and a section beam (9) is fitted in the groove (8) and at its ends is supported on the straps (2).

2. A container (1) for liquid according to claim 1 characterized in that the side walls of the section beam (9) are offset and the side faces of the groove are provided at least at certain places with projections (10), which engage the offset portions on the rear and/or at the bottom like a snap-action fastener.

3. A container (1) for liquid according to claim 1 or 2, characterized in that the ends of the section beam (9) are rounded and/or chamfered.

4. A container (1) for liquid according to any of claims 1 to 3, characterized in that the section beam (9) has approximately the shape of a body of constant strength.

3

## Revendications

1. Réservoir de liquide (1), particulièrement réservoir de carburant pour véhicules automobiles, qui est fixé à la face inférieure du véhicule (3) à l'aide de deux bandes de fixation (2) disposées dans des plans parallèles et se conformant approximativement en U au réservoir, <u>caractérisé</u> en ce que le fond (7) du réservoir présente au moins une rainure (8) ouverte vers le bas, en ce que cette rainure (8) s'étend transversalement aux bandes de fixation (2) d'une bande à l'autre, et en ce qu'un support profilé (9) s'appuyant par ses extrémités sur les bandes de fixation (2) est disposé convenablement dans la rainure (8).

2. Réservoir de liquide (1) selon la revendication 1, <u>caractérisé</u> en ce que les parois latérales du support profilé (9) sont à épaulements et sur les flancs de la rainure sont prévues des saillies (10) qui s'engagent élastiquement derrière ou sous les épaulements.

3. Réservoir de liquide (1) selon la revendication 1 ou 2, <u>caractérisé</u> en ce que les extrémités du support profilé (9) sont arrondies ou chanfreinées.

4. Réservoir de liquide (1) selon l'une des revendications 1 à 3, <u>caractérisé</u> en ce que le support profilé (9) est réalisé approximativement comme un corps d'égale résistance.

FIG.1

FIG.2

FIG.4

FIG.3